**Europäisches Patentamt**

**European Patent Office**

**Office européen des brevets**

(19)

(11) Publication number : **0 400 702 B1**

(12)

# EUROPEAN PATENT SPECIFICATION

(45) Date of publication of patent specification :
30.12.92 Bulletin 92/53

(51) Int. Cl.⁵ : **B65G 47/61, F16B 45/02**

(21) Application number : **90201213.7**

(22) Date of filing : **14.05.90**

(54) Conveyor hook intended for an overhead conveyor.

(30) Priority : **30.05.89 NL 8901365**

(43) Date of publication of application :
**05.12.90 Bulletin 90/49**

(45) Publication of the grant of the patent :
**30.12.92 Bulletin 92/53**

(84) Designated Contracting States :
**AT BE CH DE DK ES FR GB GR IT LI LU NL SE**

(56) References cited :
**EP-A- 0 307 045**
**WO-A-79/00396**
**DE-A- 1 932 802**
**NL-A- 7 008 371**

(73) Proprietor : **PROMECH SORTING SYSTEMS B.V.**
**2, Claes Tillyweg**
**NL-2031 CW Haarlem (NL)**

(72) Inventor : **Geerts, Gerhardus Christianus deceased**
**(NL)**

(74) Representative : **Mathol, Heimen, Ir. et al**
**EXTERPATENT P.O. Box 3241**
**NL-2280 GE Rijswijk (NL)**

EP 0 400 702 B1

Jouve, 18, rue Saint-Denis, 75001 PARIS

## Description

The invention relates to a conveyor hook of the snap hook type, intended in particular for use in a plant in which products are picked up from a supply or a stock by a conveyor, then conveyed and, finally, selectively discharged into one of a number of discharge stations of the plant, said hook being provided with a closing lip capable of being turned inwards against spring tension, and the free end of which interacts with the tip of a displaceable bottom part of the hook. Such a hook is known from Netherlands Patent Application 70 08371. In that case it concerns a plant for conveying and selectively discharging items of clothing, which are themselves carried by a clothes hanger, said hanger then bearing upon the above-mentioned bottom part of the conveyor hook.

In practice, it has occasionally happened that the clothes hanger penetrated between the bottom part of the hook and the free end of the lip. This phenomenon was mainly found during a swinging movement of the clothes hanger or while the conveyor was passing through a sloping part of the journey. Sometimes the air flow in the handling room (caused, for example, by the air conditioning) was also at the origin of such an unpleasant occurrence. For, there is then a risk of the hanger with the garment falling down onto an undesirable place, and not onto its predetermined destination.

The object of the invention is to provide an improvement which prevents the occurrence of the above-described phenomenon. This object is achieved according to the invention in that one of the two interacting parts of the hook (lip or hook bottom) is wider than the other part in such a way that the wider part grips over the other part in a straddling position (see Document WO-A-7 900 396), and in that the lip is provided with a stop which in the rest position of the lip interacts with the body of the hook in such a way that no contact occurs between the lip and the tip of the hook bottom.

Through these measures, a clothes hanger is prevented in a satisfactory manner from "worming through" between the lip and the hook bottom, while the lack of contact pressure of the lip on the bottom part of the hook also means that a very light actuation of the lip (in the case of a new clothes hanger to be taken up) becomes possible.

The invention will be explained in greater detail with reference to the drawing, which shows an embodiment of the conveyor hook. Further special features and characteristics of the invention will also be discussed.

Fig. 1 is a front view of the conveyor hook, viewed in the travelling direction of the conveyor.

Fig. 2 is a side view in the direction of the arrows II-II of Fig. 1.

Figs. 3 and 4 each give a front view of a variant of the lip and the bottom part of the hook.

Fig. 5 is a side view in the direction of the arrrow V in Fig. 3.

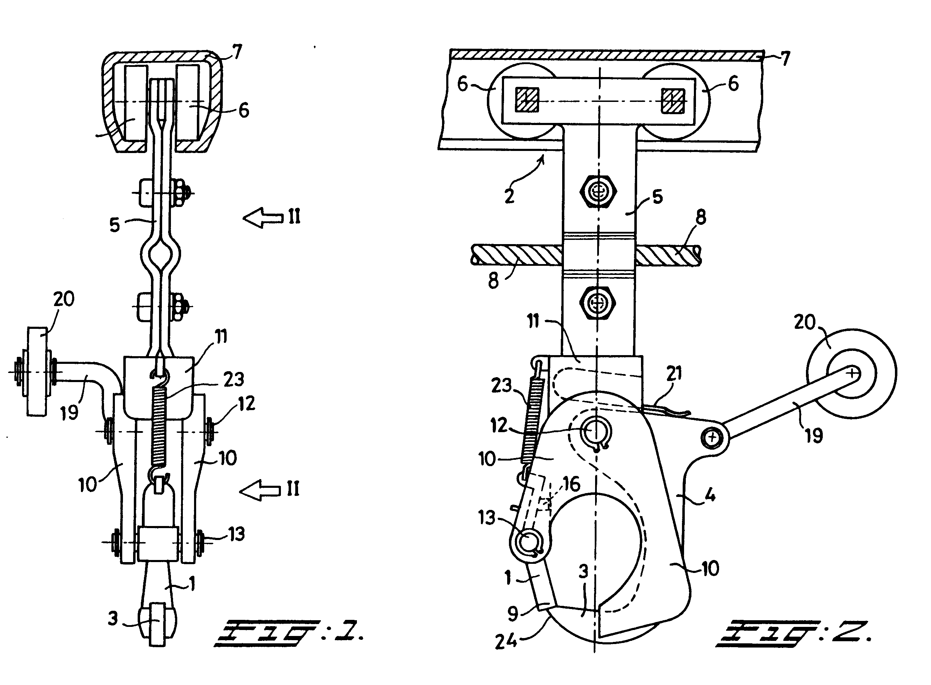

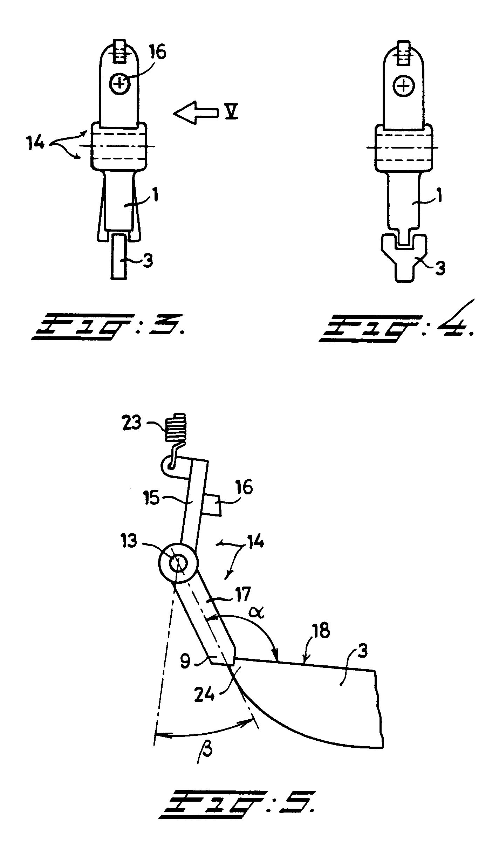

As can be seen in Figs. 1 and 2, the conveyor hook shown therein is of the snap hook type, i.e. it is provided with a closing lip 1 which can be turned inwards against spring pressure. The conveyor hook shown is intended in particular for use in a plant of the type described in the above-mentioned Netherlands Patent Application 70 08371, in which plant products (garments) carried by clothes hangers are picked up from a supply or a stock by a conveyor 2, said hangers then being conveyed and, finally, selectively discharged. The lip 1 interacts with a displaceable bottom part 3 of the hook 4. The conveyor hook is provided with a T-shaped mounting element 5 with trolley wheels 6. These wheels 6 run in an inverted U-shaped channel 7 and are moved along by means of a cable 8. The interaction between the lip 1 and the hook 4 is limited to the free end 9 of the lip and the tip 24 of the bottom part 3 of the hook. Up to this stage the conveyor hook corresponds broadly to the above-mentioned state of the art.

As can best be seen in Fig. 3, one part (e.g. the free end 9 of the lip 1) of the interacting parts 9 and 24 is made a number of times wider than the tip 24 of the bottom part 3 of the hook 4. In this case said end 9 grips over said tip 24 in a straddling position. Fig. 4 shows the inverse, in that the other interacting part, namely the tip 24, is made wider than the end 9 of the lip 1, and thus straddles said end. Both the lip 1 and the hook 4 are accommodated in a C-shaped plastic hook housing 10, provided with a moulded-on mounting head 11. The T-shaped element 5 is mounted on this head 11. The housing 10 is also provided with two hinge pins 12 and 13 for carrying the hook 4 and the lip 1 respectively, in such a way that the hook is displaceable for discharging the carried product (the clothes hanger). The lip 1 interacting with the bottom part 3 of the hook 4 is designed as a two-armed lever 14 (see Fig. 4). One arm 1 forms the actual lip, and the other arm 15 is provided with a stop 16, which determines the rest position of the lip. Said stop 16 in fact runs against the body of the hook housing 10.

As can be seen in Fig. 5, the longitudinal axis 17 of the lip 1, in the closed position of the hook 4, forms an angle $\alpha$ with the top face 18 of the bottom part 3 of the hook 4. Through the presence of the stop 16, the lip 1 interacts in such a way with the hook 4 or with the hook housing 10 that there is no contact between the free end 9 of the lip 1 and the tip 24 of the bottom part 3 of the hook 4.

The hook 4 is provided with an arm 19 which is secured thereto and bears a roller 20 at the end. The mounting head 11 of the plastic hook housing 10 is hollow for the accommodation therein of a hairpin spring 21. Said spring can exert pressure on the hook 4, in such a way that the bottom part 3 of said hook is held in the closed position. The mounting head 11 also forms a supporting point 22 for a tension spring 23 which is connected to the second arm 15 of the lip 1. This tension spring 23 makes it possible for the lip 1 to turn inwards against spring pressure to admit an object, for example the curved hook of a clothes hanger into the hook. It is pointed out that the axis 17 of the lip 1 forms an angle $\beta$ with the extension of the second arm 15 of the lever 14. The angle $\alpha$ is greater than 90°, and the angle $\beta$ is smaller than 90°.

As is known from the state of the art, the roller 20 of the conveyor hook at a discharge station interacts with a sloping surface (not shown) which is activated as soon as a product brought along in the conveyor hook concerned has to be discharged. The roller 20 runs up against the sloping face and in doing so turns the hook 4 about the hinge 12 for opening of the hook and discharging the product. It is pointed out that the above-described interaction between the free end 9 of the lip 1 and the tip 24 of the bottom part 3 of the hook 4 ensures that no products can fall out of the conveyor hook prematurely.

## Claims

1. Conveyor hook of the snap hook type, intended in particular for use in a plant in which products are picked up from a supply or a stock by a conveyor, then conveyed and, finally, selectively discharged, said hook being provided with a closing lip (1) capable of being turned inwards against spring tension, and the free end (9) of which interacts with the tip (24) of a displaceable bottom part of the hook, **characterized in that** one of the two interacting parts (9 or 24) of the hook (4) is wider than the other part (24 or 9), in such a way that the wider part grips over the other part in a straddling position, and in that the lip (9) is provided with a stop (16) which in the rest position of the lip interacts with the body of the hook in such a way that no contact occurs between the lip and the tip (24) of the hook bottom (3).

2. Conveyor hook according to Claim 1, **characterized in that** the free end (9) of the lip (1) is made a number of times wider than the tip (24) of the bottom part (3) of the hook (4).

3. Conveyor hook according to Claim 1 or 2, **characterized in that** in the closed position of the hook (4) the longitudinal axis (17) of the lip (1) forms an angle ($\alpha$) greater than 90°C with the top face (18) of the bottom part (3) of the hook.

4. Conveyor hook according to any of the preceding claims, provided with a T-shaped mounting element with trolley wheels, **characterized** by a C-shaped plastic hook housing (10) with a moulded-on head (11) on which the element (5) is mounted, said housing being provided with two hinge pins (12, 13) for carrying the hook (4) and the lip (1) respectively, in such a way that the hook is displaceable for discharging the product carried, while the lip (1) interacting with the bottom part (3) of the hook (4) is designed as a two-armed lever, one arm of which forms the actual lip (1), and the other arm (15) of which is provided with the stop (16) which determines the rest position of the lip.

5. Conveyor hook according to Claim 4,, **characterized in that** the mounting head (11) of the plastic hook housing (10) is hollow for the accommodation therein of a hairpin spring (21) which can exert pressure for holding the bottom part (3) of the hook (4) in the closed position, while the mounting head also forms a supporting point (22) for a tension spring (23) which is connected to the second arm (15) of the lip (1).

## Patentansprüche

1. Förderhaken nach Art eines Karabinerhakens, insbesondere zur Verwendung in einem betrieb, in dem Produkte von einem Vorrat oder einer Lagerstelle von einem Förderer aufgenommen, dann gefördert und schließlich selektiv abgegeben werden, wobei der Haken mit einer gegen Federspannung nach innen bewegbaren Schließlippe (1) versehen ist, deren freies Ende (9) mit der Spitze (24) eines verlagerbaren Bodenteils des Hakens zusammenwirkt, wobei einer der beiden zusammenwirkenden Teile (9 oder 24) des Hakens (4) breiter als der andere Teil (24 oder 9) ist, derart, daß der breitere Teil den anderen Teil in einer Überspannungsstellung übergreift, dadurch gekennzeichnet, daß die Lippe (9) mit einem Anschlag (16) versehen ist, der in der Ruhestellung der Lippe mit dem - Rumpf des Hakens derart zusammemwirkt, daß keine Berührung zwischen der Lippe und der Spitze (24) des Hakenbodens (3) erfolgt.

2. Förderhaken nach Anspruch 1, dadurch gekennzeichnet, daß das freie Ende (9) der Lippe (1) mehrfach breiter als die Spitze (24) des Bodenteils (3) des Hakens (4) ausgebildet ist.

3. Förderhaken nach Anspruch 1 oder 2, dadurch gekennzeichnet, daß in der geschlossenen Stellung des Hakens (4) die Längsachse (17) der Lippe (1) einen Winkel ($\alpha$) größer als 90° mit der oberen Fläche (18) des Bodenteils (3) des Hakens bildet.

4. Förderhaken nach einem der vorhergehenden Ansprüche, versehen mit einem T-förmigen Montageteil mit Laufrädern, gekennzeichnet durch ein C-förmiges Kunststoff-Hakengehäuse (10) mit einem angeformten Kopf (11), an dem das Teil (5) angebracht ist, wobei das Gehäuse mit zwei Schwenkbolzen (12,13) zum Abstützen des Hakens (4) bzw. der Lippe (1) versehen ist, derart, daß der Haken zur Abgabe des getragenen Produkts verlagerbar ist, während die mit dem Bodenteil (3) des Hakens (4) zusammenwirkende Lippe (1) als zweiarmiger Hebel ausgebildet ist, von dem ein Arm die eigentliche Lippe (1) bildet und der andere Arm (15) mit dem Anschlag (16) versehen ist, der die Ruhestellung der Lippe bestimmt.

5. Förderhaken nach Anspruch 4, dadurch gekennzeichnet, daß der Montagekopf (11) des Kunststoff-Hakengehäuses (10) hohl ist, um darin eine Haarnadelfeder (21) aufzunehmen, die einen Druck zum Halten des Bodenteils (3) des Hakens (4) in der geschlossenen Stellung ausüben kann, wobei der Montagekopf ferner einen Abstützungspunkt (22) für eine Zugfeder (23) bildet, die mit dem zweiten Arm (15) der Lippe (1) verbunden ist.

## Revendications

1. Crochet de transport, du type crochet à encliquetage, destiné en particulier à être utilisé dans une installation dans laquelle des produits sont pris dans une alimentation ou un stock par un transporteur, puis transportés et finalement déchargés sélectivement, ledit crochet étant doté d'un bec de fermeture (1) pouvant être tourné vers l'intérieur contre la tension d'un ressort, et dont l'extrémité libre (9) interagit avec la pointe (24) d'une partie inférieure déplaçable du crochet, dans lequel une des deux parties en interaction (9 ou 24) du crochet (4) est plus large que l'autre partie (24 ou 9), de façon que la sortie la plus large recouvre l'autre partie en la chevauchant, caractérisé en ce que le bec (9) est doté d'une butée (16), qui dans la position de repos du bec, interagit avec le corps du crochet, de façon qu'il n'y ait pas de contact entre le bec et la pointe (24) de la partie inférieure (3) du crochet.

2. Crochet de transport selon la revendication 1, caractérisé en ce que l'extrémité libre (9) du bec (1) est réalisée un certain nombre de fois plus large que la pointe (24) de la partie inférieure (3) du crochet (4).

3. Crochet de transport selon la revendication 1 ou la revendication 2, caractérisé en ce que, dans la position fermée du crochet (4), l'axe longitudinale (17) du bec (1) forme un angle α supérieur à 90° avec la face supérieure (18) de la partie inférieure (3) du crochet.

4. Crochet de transport selon l'une quelconque des revendications précédentes, doté d'un élément de montage en forme de T avec des galets, caractérisé par un châssis de crochet (10) en matière plastique, en forme de C avec une tête surmoulée (11) sur laquelle est monté l'élément (5), ledit chassis étant doté de deux axes d'articulation (12, 13) pour supporter le crochet (4) et le bec (1) respectivement, de façon que le crochet soit déplaçable pour décharger le produit porté, tandis que le bec (1) qui interagit avec la partie intérieure (3) du crochet (4), est conçu comme un levier à deux bras, un bras formant réellement le bec (1), l'autre bras (15) étant doté de la butée (16) qui détermine la position de repos su bec.

5. Crochet de transport selon la revendication 4, caractérisé en ce que la tête de montage (11) du chassis (10) de crochet en matière plastique est creuse, de façon à pouvoir recevoir dans son intérieur un ressort en épingle à cheveux (21), qui peut exercer une pression pour maintenir la partie inférieure (3) du crochet (4) dans la position fermée, tandis que la tête de montage forme aussi un point de support (22) pour un ressort de tension (23) qui est connecté au deuxième bras (15) du bec (1).

EP 0 400 702 B1

*FIG:1.*

*FIG:2.*

_FIG : 3._

_FIG : 4._

_FIG : 5._